**Europäisches Patentamt**

**European Patent Office**

**Office européen des brevets**

(19)

(11) Veröffentlichungsnummer: **0 068 062**
**B1**

(12) ## EUROPÄISCHE PATENTSCHRIFT

(45) Veröffentlichungstag der Patentschrift:
**10.04.85**

(21) Anmeldenummer: **81730062.7**

(22) Anmeldetag: **30.06.81**

(51) Int. Cl.⁴: **H 02 K 5/16**, F 16 C 17/24

(54) Isoliertes Lager für eine elektrische Maschine.

(43) Veröffentlichungstag der Anmeldung:
**05.01.83 Patentblatt 83/1**

(45) Bekanntmachung des Hinweises auf die Patenterteilung:
**10.04.85 Patentblatt 85/15**

(84) Benannte Vertragsstaaten:
**CH DE FR GB LI**

(56) Entgegenhaltungen:
**DE - C - 522 324**
**DE - C - 946 672**
**DE - U - 8 029 066**
**GB - A - 1 591 560**

**Patent Abstracts of Japan Band 5, Nr. 11, 23. Januar 1981**

(73) Patentinhaber: **SIEMENS-ALLIS, INC., 223 Perimeter Center Parkway, Atlanta Georgia 30338 (US)**

(72) Erfinder: **Shaffer, Don L., 2519 Clifton Avenue, Cincinnati Ohio 45220 (US)**

(74) Vertreter: **Mehl, Ernst, Dipl.-Ing. et al, Postfach 22 01 76, D-8000 München 22 (DE)**

## Beschreibung

Die Erfindung bezieht sich auf ein isoliertes Lager für eine elektrische Maschine, bei dem im Lagergehäuse eine gut haftend aufgebrachte Isolierschicht das Auftreten von Lagerströmen verhindert, die aus einer metallischen Gundschicht und einer Keramikschicht besteht, die untereinander gut haften. Ein derartiges, als Wälzlager ausgebildetes isoliertes Lager ist aus der GB-A-1 591 560 bekannt. Ein isoliertes Lager wird eingesetzt, weil Lagerströme durch die Läuferwelle von elektrischen Maschinen fliessen können und sehr schädliche Auswirkungen auf die Lagerflächen haben. Dies hat eine entsprechende Verschlechterung der Lagereigenschaften zur Folge und führt zu einer Verkürzung der Lagerlebensdauer, so dass es unter Umständen erforderlich werden kann, dass die elektrische Maschine ausser Betrieb genommen und repariert oder umgebaut werden muss. Ein isoliertes Lager vermeidet diese Schäden.

Bei dem aus der GB-A-1 591 560 bekannten isolierten Wälzlager ist die geschichtete Isolierschicht in der Bohrung im Lagerschild angeordnet. Sie besteht aus einer metallischen Grundschicht, einer Aluminiumnickelverbindung, und einer Keramikschicht aus Aluminiumoxid, die nacheinander durch Flammspritzen bzw. durch Plasmaschweissen aufgebracht sind. Durch dieses Herstellungsverfahren haften diese Schichten gut am Lagerschild und auch untereinander, so dass eine Bearbeitung der obenliegenden Schicht aus Aluminiumoxid durch Schleifen möglich ist. Diese Schicht bildet dann die Bohrung für den Aussenring des Wälzlagers. Das Wälzlager wird in üblicher Weise in diese Bohrung eingepresst.

Weiterhin ist aus der US-PS 3 924 906 ein Traglager einer elektrischen Maschine bekannt, das von einer Schicht eines isolierenden Keramikmaterials umgeben ist, das in flüssiger Form aufgebracht werden kann. Die dünne Keramikschicht wird dann mit einem härtbaren, flüssigen Isoliermaterial, z.B. Lack, imprägniert, um sowohl eine Verunreinigung des Keramikmaterials zu verhindern, als auch die Laufeigenschaften zu verbessern, damit die Wahrscheinlichkeit veringert wird, dass die Isolieroberfläche abspringt oder beschädigt wird. Es hat sich jedoch herausgestellt, dass die auf diese Weise erzeugte Isolieroberfläche vor und während des Einbaus in die Maschine beschädigungsanfällig ist und dass es ferner schwierig ist, die für die Aussenfläche des beschichteten Bauteiles erforderlichen Toleranzenn einzuhalten.

Der Erfindung liegt die Aufgabe zugrunde, ein isoliertes Gleitlager zu schaffen, bei die die Isolierschicht nicht schadenanfällig ist.

Zur Lösung dieser Aufgabe ist gemäss der Erfindung bei einem isolierten Gleitlager im Lagergehäuse oder in der Lagerschale unterhalb der tragenden Schicht aus Lagermaterial die Isolierschicht vorgesehen, die dreiteilig aufgebaut ist und aus einer Grundschicht, einer Keramikschicht und einer metallischen Haftschicht zwischen der Keramikschicht und dem Lagermaterial besteht, wobei die metallische Haftschicht sowohl mit der Keramikschicht als auch mit dem Lagermaterial gut haftend physikalisch verbunden ist. Die Isolierschicht ist also als Verbundisolierschicht auf der Unterseite des Lagermetalls angeordnet und mit ihr über die metallische Haftschicht so gut haftend physikalisch verbunden, dass sie praktisch als einteilig zum Lagermaterial angesehen werden kann. Das Lagermaterial kann wie üblich bearbeitet werden und trotzdem ist die Isolierschicht vor den dabei auftretenden Beanspruchungen, sowie auch später vor den Betriebsbeanspruchungen, und vor Beschädigungen geschützt. Die notwendige Isolierung zwischen der isolierenden Welle und den stehenden Lagerteilen ist aber eindeutig gegeben.

Damit bei einem geteilten Lagergehäuse durch die notwendige Bearbeitung der Teilungsflächen keine unerwünschte leitende Überbrückung der Isolierschicht auftreten kann, empfiehlt es sich, dass an den Teilungsflächen des Lagergehäuses das Lagermaterial bis zur Isolierschicht gegenüber dem Lagergehäuse zurückgesetzt ist. Ein Verschmieren des weicheren metallischen Lagermaterials, das leitende Wege über der Keramikschicht erzeugen würde, ist somit verhindert.

Es ist besonders vorteilhaft, die gemäss der Erfindung ausgebildete Isolierschicht dadurch herzustellen, dass auf die vorbereitete Innenfläche des Lagergehäuses oder der Lagerschale die Grundschicht durch Aufsprühen des sie bildenden Materials in geschmolzener Form aufgebracht wird, dass dann auf diese Grundschicht eine Schicht geschmolzenen Keramikmaterials aufgesprüht wird, deren Dicke mindestens 0,5 mm beträgt, dass weiterhin auf die Keramikschicht die Haftschicht durch Aufsprühen des geschmolzenen Materials aufgebracht wird und dass schliesslich das Lagermaterial in geschmolzenem Zustand auf die Haftschicht aufgebracht wird und dass dann das Lagermaterial zur Herstellung der Lauffläche bearbeitet wird. Bei der so hergestellten Verbundisolierschicht sind die einzelnen Schichten untereinander und zu den benachbarten Schichten gut haftend. Da die Schmelztemperatur der Verbundisolierschicht wesentlich höherliegt als die des Lagermaterials, wird sie von der Hitze des geschmolzenen Lagermaterials nicht beeinträchtigt. Ausserdem ist die Stärke der Bindung zwischen der Verbundisolierschicht derart hoch, dass das Lagermaterial nach genauen Toleranzen bearbeitet werden kann, so dass das komplette Gleitlager einschliesslich der Aussenflächen des Lagergehäuses und der Innenfläche des Lagermaterials auf genaueste Abmessung bearbeitet werden kann.

Im folgenden sei die Erfindung noch anhand der in den Fig. 1 bis 4 der Zeichnung dargestellten Ausführungsbeispiele näher erläutert. In Fig. 1 ist ein Längsschnitt durch eine elektrische Maschine schematisch dargestellt. Fig. 2 zeigt eine perspektivische Ansicht einer Lagerschale eines Gleitlagers. In Fig. 3 ist im grösseren Massstab ein Teilschnitt durch die Lagerfläche des Gleitlagers dargestellt. Schliesslich zeigt Fig. 4 ein axiales Spurlager mit isolierten ebenen Tragsegmenten.

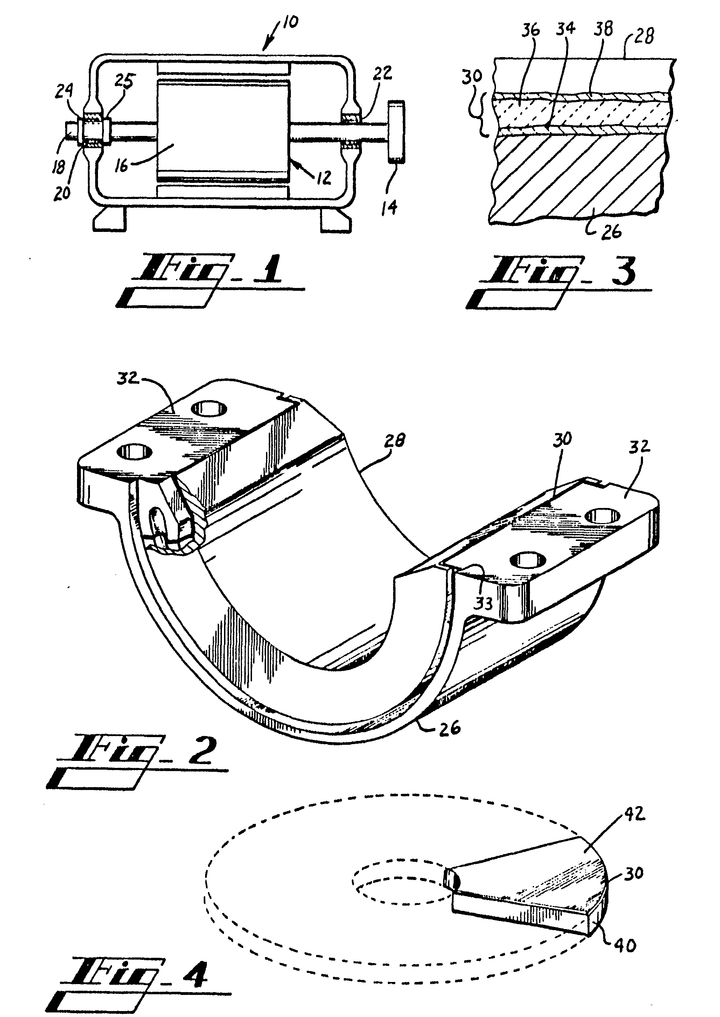

Fig. 1 zeigt eine elektrische Maschine mit dem Ständer 10 und dem Läufer 12. Das mit den Wicklungen versehene Läuferblechpaket 16 wird von der rotierenden Welle 18 getragen, an deren einem Ende die Vorrichtung 14 zur Leistungsübertragung angebracht ist, die eine Kupplung, Riemenscheibe, ein Antriebsrad oder ähnliches sein kann. Die Welle 18 wird mittels der Lager 20, 22 vom Ständer 10 getragen, die als Gleitlager mit Lagerschalen ausgebildet sind. Zur axialen Festlegung der Welle 18 innerhalb der elektrischen Maschine sind auf dieser ringförmige Vorsprünge 24 und 25 vorgesehen.

Am Läufer einer elektrischen Welle liegt häufig ein elektrisches Potential an, das wesentlich über dem des geerdeten Ständers liegt, der Erdpotential aufweist. Die gegebene Potentialdifferenz hat einen Stromfluss vom Läufer zum Ständer an allen Punkten zur Folge, an denen ein Stromübergang möglich ist. Da Läufer und Ständer normalerweise nur an den Lagern tatsächlich miteinander in Berührung kommen, bilden die Lager somit den einzig möglichen Stromübertragungspunkt zwischen Läufer und Ständer.

Obwohl die bei Gleitlagern verwendeten Schmiermittel normalerweise gute Isoliermittel sind, lässt die Potentialdifferenz zwischen der Läuferwelle und dem Läufer dennoch häufig einen Stromfluss durch den Schmiermittelüberzug zu. Dies führt zu einer Zersetzung der sich berührenden Wellen- und Lagerflächen, wodurch die Lagerabnutzung beschleunigt wird. Deshalb werden zwischen dem Lagergehäuse und Ständer Isoliermaterialien eingesetzt, um den Läufer vom Ständer elektrisch zu isolieren. In Fig. 2 ist die Lagerschale bzw. das Lagergehäuse 26 eines Gleitlagers dargestellt, das auf der Innenseite mit einer Schicht aus Lagermaterial 28, z.B. aus Lagerweissmetall ausgekleidet ist. Die Tragfläche des Gleitlagers, d.h. die Schicht aus Lagermaterial 28, ist nach genauen Toleranzen bearbeitet und nimmt die rotierende Welle auf.

Zwischen dem Lagergehäuse 26 und dem Lagermaterial 28 ist die Verbundisolierschicht 30 angeordnet.

Die Zusammensetzung der Verbundisolierschicht 30 ist in Fig. 3 in grösserem Massstab gezeigt. Das Material des Lagergehäuses 26, das häufig ein eisenhaltiges Material ist, wie z.B. Gusseisen oder Stahl, wird mit einer dünnen Grundschicht 34 überzogen. Diese Grundschicht 34 hat unmittelbaren Kontakt mit dem Lagergehäuse 26 und haftet daran. Auf der Grundschicht 34 ist eine Keramikschicht 36 aufgetragen, welche die erwünschten Isoliereigenschaften aufweist. Diese Keramikschicht 36 wird von einer metallischen Haftschicht 38 überlagert, die vorzugsweise aus einem Metall besteht, das sich sowohl mit dem Material der Keramikschicht 36 als auch mit dem Lagermaterial 28, gewöhnlich Lagerweissmetall, verträgt.

Das Lagergehäuse 26 ist geteilt ausgebildet, so dass sich in einer Durchmesserebene liegende Teilungsflächen 32 ergeben, die bearbeitet werden. Um zu verhindern, dass das Lagermetall 28 während der Bearbeitung der Teilungsflächen 32 über die Isolierschicht 30 verwischt werden kann, so dass ein elektrischer Kontakt mit dem Lagergehäuse 26 entstehen würde, ist das Lagermaterial 28 durch einen bis zur Isolierschicht 30 gehenden Absatz gegenüber den Teilungsflächen 32 zurückgesetzt. Die Isolierschicht 30 begrenzt diesen Absatz. Wird der Absatz wie in Fig. 2 dargestellt, durch eine Abschrägung der Oberfläche des Lagermaterials 28 gebildet, so ist an der Begrenzung des Absatzes die schräg angeschnittene Isolierschicht breiter als es ihrer Dicke entspricht. Ihre trennende Wirkung wird somit verstärkt.

An den Stirnflächen ist ausserdem zwischen dem Lagergehäuse 26 und dem Lagermaterial 28 eine Nute 33 an der Isolierschicht 30 vorgesehen, die durch eine Abdeckung beim Auftragen des Lagermaterials 28 gebildet wird, so dass sich dort die Isolierschicht 30 auf der Innenfläche des Lagergehäuses 26 über die Stirnfläche des Lagermaterials 28 hinaus erstreckt. Dies verhindert, dass das Lagermaterial 28 an den Stirnflächen zum Material des Lagergehäuses 26 verwischt wird.

Bei der Herstellung der Verbundisolierschicht 30 wird zunächst die Innenfläche des Lagergehäuses 26 durch Kiessandstrahlen oder einen chemischen Reinigungsprozess aufbereitet, wie z.B. die Behandlung des Metalls mit einem Ätz- und Reinigungsmittel. Man kann auch in die Oberfläche des Lagergehäuses 26 Nuten einarbeiten, um eine bessere Haftung der Verbundisolierschicht 30 zu erzielen.

Dann wird die Grundschicht 34 auf die Oberflächen des Lagergehäuses 26 aufgetragen, vorzugsweise mittels eines bekannten Plasma-Sprühverfahrens. Derartige Verfahren sind z.B. in den Veröffentlichungen von Metco, Inc., Westbury, New York, wie «Metco flame spraying processes» und «Handbook of coating recommendations» beschrieben. Die Grundschicht 34 kann auch aus einer Nickelaluminitlegierung oder ähnlichem hergestellt sein, in einer Dicke von 0,05 mm bis 0,1 mm. Unmittelbar danach wird die Keramikschicht 36 aufgetragen, möglichst mit demselben Plasma-Sprühverfahren. Die Keramikschicht 36 sollte vorzugsweise aus Aluminiumoxid sein.

Dann wird die Keramikschicht 36 mit einer Haftschicht 38 aus Metall, wie z.B. Kupfer, ebenfalls mit derselben Plasma-Sprühmethode überzogen. Diese Haftschicht 38 ergibt die notwendige physikalische Bindung zwischen der nachfolgenden Schicht aus Lagermaterial 28 und der vorangehenden Keramikschicht 36. Die Haftschicht wird vorzugsweise mit einer Dicke von 0,05 bis 0,0125 mm aufgetragen.

Da die Haftschicht 38 die Neigung hat, durch die Keramikschicht 36 hindurchzuwandern, bzw. sie zu durchdringen und dadurch einen elektrischen Kontakt zwischen der Haftschicht 38 und somit dem Lagermaterial 28 und dem Lagergehäuse 26 herzustellen, sollte, um dies zu vermeiden, die Keramikschicht 36 eine Mindeststärke von 0,5 mm haben.

Die letzte Schicht, die Schicht aus Lagermaterial 28, kann durch ein Plasma-Sprühverfahren, durch Spinnguss oder andere geeignete Verfahren aufgetragen werden. Da die Schmelztemperatur der Verbundisolierschicht 30 wesentlich höher liegt als die des Lagermaterials 28, wird sie von der Hitze des geschmolzenen Lagermaterials 28, z.B. Lagerweissmetall, nicht beeinträchtigt. Ferner ist die Stärke der Bindung zwischen den Materialien der einzelnen Schichten derart hoch, dass das Lagermaterial nach genauen Toleranzen bearbeitet werden kann, so dass das komplette Lagerteil einschliesslich der Aussenflächen des Lagergehäuses 26 und der tragenden Innenfläche des Lagermaterials 28 auf die präzisen Abmessungen gebracht werden kann.

In Fig. 4 ist als weiteres Ausführungsbeispiel der Erfindung ein ebenes axiales Spurlager dargestellt. Ein solches Spurlager setzt sich aus einer einzigen Tragscheibe bzw. einer Vielzahl von Tragsegmenten 40 zusammen, die jeweils unabhängig gelagert sind. Das Tragsegment 40 trägt auf der der Lagerfläche zugewandten Oberfläche eine Verbundisolierschicht 30 und die eigentliche Tragschicht 42 aus Lagermaterial, wie z.B. Lagerweissmetall, die über der Isolierschicht 30 liegt. Wie bereits vorstehend ausgeführt, lassen sich an den Rändern des Tragsegmentes 40 Absätze bzw. Einkerbungen vorsehen, die elektrische Kurzschlüsse aufgrund von Verwischen des Lagermaterials während der Bearbeitung des Tragsegmentes 40 verhindern.

## Patentansprüche

1. Isoliertes Lager für eine elektrische Maschine, bei dem im Lagergehäuse (26) eine gut haftend aufgebrachte geschichtete Isolierschicht (30) das Auftreten von Lagerströmen verhindert, die aus einer metallischen Grundschicht (34) und einer Keramikschicht (36) besteht, die untereinander gut haften, dadurch gekennzeichnet, dass bei einem isolierten Gleitlager im Lagergehäuse (26) oder in der Lagerschale unterhalb der tragenden Schicht aus Lagermaterial (28) die Isolierschicht (30) vorgesehen ist, die dreiteilig aufgebaut ist und aus einer Grundschicht (34), einer Keramikschicht (36) und einer metallischen Haftschicht (38) zwischen der Keramikschicht (36) und dem Lagermaterial (28) besteht, wobei die metallische Haftschicht (38) sowohl mit der Keramikschicht (36) als auch mit dem Lagermaterial (28) gut haftend physikalisch verbunden ist.

2. Isoliertes Lager nach Anspruch 1 mit geteiltem Lagergehäuse, dadurch gekennzeichnet, dass an den Teilungsflächen (32) das Lagergehäuses (26) das Lagermaterial (28) bis zur Isolierschicht (30) gegenüber dem Lagergehäuse (26) zurückgesetzt ist.

3. Isoliertes Lager nach Anspruch 1, dadurch gekennzeichnet, dass bei einem Lagergehäuse (26) aus Metall die Grundschicht (34) aus metallischem Werkstoff besteht.

4. Isoliertes Lager nach Anspruch 3, dadurch gekennzeichnet, dass die Grundschicht (34) aus einer Nickel-Aluminium-Verbindung besteht.

5. Isoliertes Lager nach Anspruch 1 oder 2, dadurch gekennzeichnet, dass die Keramikschicht (36) Aluminium-Oxid enthält.

6. Isoliertes Lager nach Anspruch 1 oder 5, dadurch gekennzeichnet, dass die Keramikschicht (36) mindestens 0,5 mm dick ist.

7. Isoliertes Lager nach Anspruch 1, dadurch gekennzeichnet, dass die metallische Haftschicht (38) aus Kupfer besteht.

8. Isoliertes Lager nach Anspruch 1, dadurch gekennzeichnet, dass die Isolierschicht (30) auf den Tragsegmenten (40) eines axialen Spurlagers unterhalb des Lagermaterials (42) angeordnet ist.

9. Verfahren zur Herstellung der Isolierschicht (30) an einem isolierten Lager nach einem oder mehreren der Patentansprüche 1 bis 8, dadurch gekennzeichnet, dass auf die vorbereitete Innenfläche des Lagergehäuses (26) oder der Lagerschale die Grundschicht (34) durch Aufsprühen des sie bildenden Materials in geschmolzener Form aufgebracht wird, dass dann auf diese Grundschicht (34) eine Schicht geschmolzenen Keramikmaterials (36) aufgesprüht wird, deren Dicke mindestens 0,5 mm beträgt, dass weiterhin auf die Keramikschicht (36) die Haftschicht (38) durch Aufsprühen des geschmolzenen Materials aufgebracht wird und dass schliesslich das Lagermaterial (28) in geschmolzenem Zustand auf die Haftschicht (38) aufgebracht wird und dass dann das Lagermaterial (28) zur Herstellung der Lauffläche bearbeitet wird.

## Claims

1. An insulated bearing for an eletrical machine, in which in the bearing shell (26), a stratified insulating layer (30) applied so as to adhere well, prevents the occurrence of bearing currents, said insulating layer consisting of a metal base layer (34) and a ceramic layer (36) which adhere well to one another, characterised in that with an insulating sliding bearing, in the bearing shell (26) or in the bearing bush below the bearing layer of bearing material (28), there is arranged the insulating layer (30) which is made up of three components and consists of a base layer (34), a ceramic layer (36) and metal bonding layer (38), between the ceramic layer (36) and bearing material (28), the metal bonding layer (38) being physically connected both to the ceramic layer (36) and to the bearing material (28) so as to adhere well.

2. An insulated bearing as claimed in Claim 1 having a divided bearing shell, characterised in that, at the division surfaces (32) of the bearing shell (26), the bearing material (28) is cut back opposite to the bearing shell (26) as far as the insulating layer (30).

3. An insulated bearing as claimed in Claim 1, characterised in that with a bearing shell (26) made of metal, the base layer (34) consists of metallic material.

4. An insulated bearing as claimed in Claim 3, characterised in that the base layer (34) consists of a nickel-aluminium compound.

5. An insulated bearing as claimed in Claim 1 or Claim 2, characterised in that the ceramic layer (36) contains aluminium oxide.

6. An insulated bearing as claimed in Claim 1 or Claim 5, characterised in that the ceramic layer (36) is at least 0.5 mm thick.

7. An insulated bearing as claimed in Claim 1, characterised in that the metal bonding layer (38) consists of copper.

8. An insulated bearing as claimed in Claim 1, characterised in that the insulating layer (30) is arranged on the bearing segments (40) of an axial thrust bearing beneath the bearing material (42).

9. A method for the production of the insulating layer (30) on an insulated bearing as claimed in one or more of Claims 1 to 8, characterised in that the base layer (34) is applied to the prepared inner surface of the bearing shell (26) or the bearing bush by spraying on the material of which it is made in molten form; that a layer of molten ceramic material (36) whose thickness is at least 0.5 mm is then sprayed on to this base layer (34); that the bonding layer (38) is then applied to the ceramic layer (36) by spraying on the molten material; that finally the bearing material (28) is applied in molten form to the bonding layer (38); and that the bearing material (28) is then processed to form the bearing surface.

**Revendications**

1. Palier isolé pour une machine électrique, dans lequel on a déposé dans le boîtier du palier (26) une couche stratifiée isolante (30) à bonne adhérence, qui empêche l'apparition de courants de palier et qui est constituée par une couche métallique de base (34) et par une couche céramique (36), qui adhèrent bien entre elles, caractérisé par le fait que dans le cas d'un palier lisse, on prévoit dans le boîtier du palier (26) ou dans la coquille de coussinet, en-dessous de la couche portante en matériau constitutif du palier (28), la couche isolante (30) qui est constituée en trois parties et qui est formée par une couche céramique (36) et par une couche métallique adhérente (38) entre la couche céramique (36) et le matériau constitutif du palier (28), la couche métallique adhérente (38) étant liée physiquement et avec une bonne adhérence aussi bien à la couche céramique (36) qu'au matériau constitutif (28) du palier.

2. Palier isolé selon la revendication 1, avec un boîtier du palier subdivisé, caractérisé par le fait qu'au niveau des surfaces (32) de la subdivision du boîtier du palier (26), le matériau constitutif du palier (28) est en retrait jusqu'à la couche isolante (30) par rapport au boîtier du palier (26).

3. Palier isolé selon la revendication 1, caractérisé par le fait que dans le cas d'un boîtier du palier (26) en un métal, la couche de base (34) est constituée par un matériau métallique.

4. Palier isolé selon la revendication 3, caractérisé par le fait que la couche de base (34) est constituée par un composé à base de nickel-aluminium.

5. Palier isolé selon la revendication 1 ou 2, caractérisé par le fait que la couche céramique (36) comporte un oxyde d'aluminium.

6. Palier isolé selon la revendication 1 ou 5, caractérisé par le fait que la couche céramique (36) a une épaisseur d'au moins 0,5 mm.

7. Palier isolé selon la revendication 1, caractérisé par le fait que la couche métallique adhérente (38) est constituée par du cuivre.

8. Palier isolé selon la revendication 1, caractérisé par le fait que la couche isolante (30) est disposée sur les segments de support (40) d'une crapaudine axiale, en-dessous du matériau constitutif (42) du palier.

9. Procédé pour la fabrication de la couche isolante (30) d'un palier isolé selon une ou plusieurs des revendications 1 à 8, caractérisé par le fait que sur la surface intérieure préparée du boîtier du palier (26) ou de la coquille de coussinet, la couche de base (34) est déposée par pulvérisation du matériau qui la constitue et qui est sous forme fondue, que l'on dépose ensuite sur cette couche de base (34), par pulvérisation, une couche de matériau céramique fondue, dont l'épaisseur est au moins égale à 0,5 mm, qu'en outre, sur cette couche céramique (36) on dépose la couche adhérente (38) par pulvérisation du matériau fondu, et qu'enfin on dépose le matériau (28) constitutif du palier, à l'état fondu, sur la couche adhérente (38), le matériau (28) constitutif du palier étant ensuite soumis à usinage en vue de réaliser les surfaces de roulement.

Fig_1

Fig_3

Fig_2

Fig_4